Europäisches Patentamt

European Patent Office

Office européen des brevets

(11) Publication number: **0 459 775 A2**

# EUROPEAN PATENT APPLICATION

(21) Application number: **91304833.6**

(51) Int. Cl.⁵: **G06F 9/46**

(22) Date of filing: **29.05.91**

(30) Priority: **30.05.90 JP 140907/90**

(43) Date of publication of application:
**04.12.91 Bulletin 91/49**

(84) Designated Contracting States:
**DE FR GB**

(71) Applicant: **FUJITSU LIMITED**
**1015, Kamikodanaka Nakahara-ku**
**Kawasaki-shi Kanagawa 211 (JP)**

(72) Inventor: **Kato, Tadaomi**
**Hiramatsu Koporasu 301, 454-1 Nishisawada**
**Numazu-shi, Shizuoka 411 (JP)**

(74) Representative: **Wells, David et al**
**Gill Jennings & Every 53/64 Chancery Lane**
**London WC2A 1HN (GB)**

(54) A processing system for assigning a program executing environment.

(57) A processing system for assigning a program executing environment comprising servers (1-i,1-j) each providing a service in response to a process request from an external source or through message communication between the servers, each server comprising a program executing environment (13-h) prepared at the time of system start up, new program executing environment (14-h) being dynamically prepared which is not linked to the already prepared program executing environment, each server (1-i,1-j) judging, based on the message communication, whether or not a request to process received from another server forms a loop among the servers, and when it is judged that the request from another server does not form a loop, the server executes a process by using the already prepared program executing environment (13-h), and when it is judged that the request from another server forms a loop, the server executes a process by using the new program executing environment (14-h) dynamically prepared, thus preventing a deadlock among the servers.

EP 0 459 775 A2

# Fig. 2

SERVER 1-i

TRANSMITTING UNIT  11-i

13-i

10-i

13-i

12-i

JUDGING UNIT  Ri

R_IN

SERVER 1-j

TRANSMITTING UNIT  11-j

13-j

10-j

13-j

12-j

JUDGING UNIT  Rj

R_IN

14-j

REQUEST TO PREPARE

PREPARING PROCESS

PEE MANAGING UNIT  ~20

The present invention relates to a processing system for assigning a program executing environment in a data processing system employing a client/server model construction, and in particular, to a processing system for assigning a program executing environment which can prevent the generation of a deadlock due to competition for utilization of the program executing environments with minimum deterioration of the performance of the system and a small memory capacity.

In a data processing system, when there is competition for utilization of resources, a deadlock state is often produced in which data processing cannot proceed during the waiting states for utilization of the resources. Because of this, in the data processing system, it is necessary to provide means for preventing the occurrence of such a deadlock state. This prevention means, however, should be realized in such a way that deterioration of the system performance is minimized and any increase in the amount of hardware is small.

A data processing system having a client-server model construction is already known. In the client-server model data processing system, a plurality of servers are provided. Each of the servers provides a process function and is provided to correspond to an object which is a subject to be processed. Each of the servers is, for example, a block of programs. A server which generates a request to another server to execute a process is called a client. The client may be a person who sends a process request to a server. In response to the request from a client to provide a service, a message communication is effected between servers to execute the service. In such a client-server model data processing system, in order to immediately execute a service process after a server receives a request to process a service through a message from another server (client), each server is provided with one or more program executing environments such as stacks, registers, control tables, and so forth necessary for executing programs. The program executing environments are resources necessary for executing programs. The term "process" may have the same meaning as the term "program executing environment". Throughout the description, however, the meaning of the term "process" is different from the meaning of the term "program executing environment".

Conventionally, all of the program executing environments are prepared at the time of system start up. The number of program executing environments is determined by a queue model as necessary and is minimum at the time of system start up. When a server receives a request to execute a service from a client through a message, the server executes the service by using the prepared program executing environments so that the service is immediately executed for the client.

In the conventional data processing system of a client-server model in which the program executing environments are prepared in advance at the time of system start up, a process in one server may inherently include a request to another server even when the request to the one server does not explicitly include the request to the another server, namely, the calling relationship between the servers need not be considered. Therefore, when a program executing environment is scrambled by plural requests, a loop among the servers may be formed so that a deadlock occurs.

In view of the above problems, an object of the present invention is to provide a processing system for assigning a program executing environment in a data processing system of a client-server model construction, which can prevent, by minimizing the deterioration of the system performance with a small memory capacity, the occurrence of a deadlock due to competition for utilization of program executing environments. To attain the above object, there is provided, according to the present invention, a processing system for assigning a program executing environment in a data processing system comprising a plurality of servers each providing a service in response to an external process request or through message communication between two of the servers. Each of the servers comprises: at least one already prepared program executing environment prepared at the time of system start up; a new program executing environment preparation unit for dynamically preparing a new program executing environment which is not linked to the already prepared program executing environment prepared at the time of system start up; a judging unit for determining, based on the message communication, whether or not a process request received from another one of the servers forms a loop among the servers; a first process executing unit for executing a process by using the already prepared program executing environment when the judging unit judges that the request from another one of the servers does not form a loop; and a second process executing unit for executing a process by using the new program executing environment dynamically prepared when the judging unit judges that the request from another one of the servers forms a loop.

According to one aspect of the present invention, there is provided a processing system for assigning a program executing environment in a data processing system comprising a plurality of servers each for providing a service, in response to a request, to an object to be processed. Message communication is effected between two of the servers for providing the request from one of the servers to another one of the servers.

An identification number is assigned in advance to each of the servers in a one to one correspondence.

Each of the servers comprises at least one program executing environment prepared at the time of system start up, a transmitting unit for transmitting, when a message communication is to be effected, an identification number assigned to its own server, and a judging unit for determining whether or not a new program executing environment should be prepared, by judging whether the identification number transmitted from another one of the servers is larger or smaller than the identification number assigned to its own server.

Each of the servers dynamically prepares a new program executing environment and executes a process by using the dynamically prepared program executing environment when the judging unit judges that a new program executing environment should be prepared.

Each of the servers executes a process by using the program executing environment prepared at the time of system start up when the judging unit judges that a new program executing environment should not be prepared.

During the execution of a process by using said dynamically prepared program executing environment, when a processing request is sent from one of the servers to another one of the servers, the transmitting unit in the requesting server transmits, instead of transmitting the identification number originally assigned to the requesting server, a new identification number different from the originally assigned identification numbers, for preparing a new program executing environment, to the requested server.

It is preferable that the dynamically prepared program executing environment be deleted when the process using the dynamically prepared program executing environment is finished.

It is also preferable that the identification number assigned to each server is assigned in such a way that the frequency of dynamically preparing program executing environments is reduced.

The above object and the features of the present invention will be more apparent from the following description of the preferred embodiments with reference to the accompanying drawings, wherein:

Fig. 1 is an explanatory diagram of the occurrence of a deadlock in a conventional data processing system of a client-server model construction;

Fig. 2 is a block diagram showing a principal construction of a data processing system according to the present invention;

Fig. 3 is a block diagram showing the construction of a data processing system according to an embodiment of the present invention;

Fig. 4 is a block diagram showing the construction of a server according to an embodiment of the present invention;

Fig. 5 is an explanatory diagram of program executing environments prepared at the time of system start up;

Fig. 6 is an explanatory diagram of a process for dynamically preparing new program executing environments according to an embodiment of the present invention; and

Fig. 7 is an explanatory diagram of the process for deleting the dynamically prepared program executing environments according to an embodiment of the present invention.

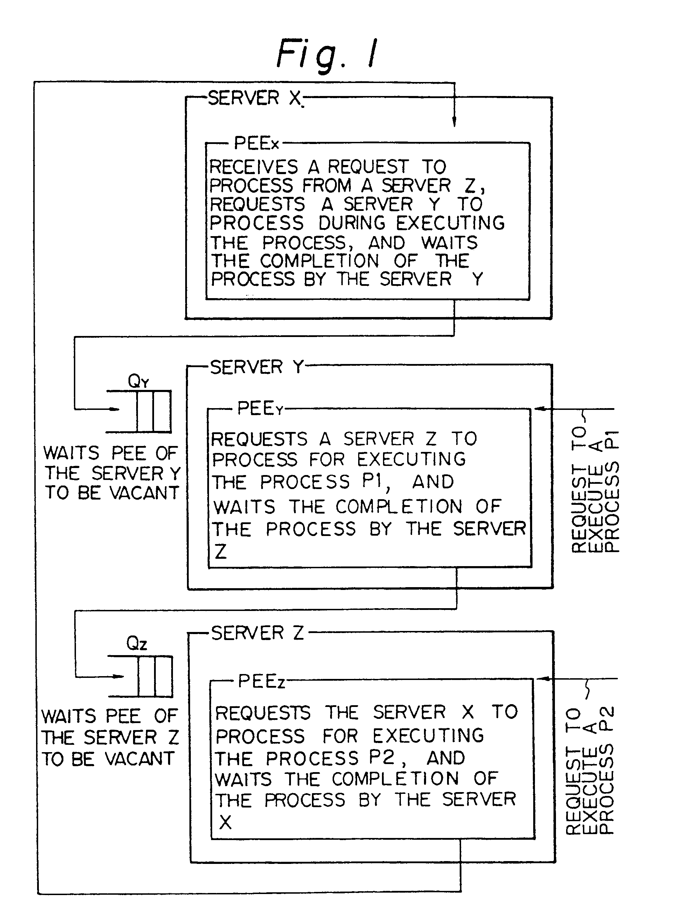

For better understanding of the present invention, the problem in the conventional art is first described with reference to Fig. 1 which is a diagram for explaining the occurrence of a deadlock in a conventional data processing system of a client-server model construction.

In Fig. 1, three servers X, Y, and Z are shown. The servers X, Y, and Z respectively include program executing environments $PEE_X$, $PEE_Y$, and $PEE_Z$ which have been prepared in advance at the time of system start up. When a request to execute a process P1 is given to the server Y, the server Y executes the process P1 by using the program executing environment $PEE_Y$ in the server Y. It should be noted that, as mentioned before, the "process" itself is different from the "program executing environment". In the example illustrated in Fig. 1, it is assumed that the execution of the process P1 by using the program executing environment $PEE_Y$ inherently includes a process request to the server Z. Therefore, to complete the process P1, a request is sent from the server Y to the server Z. It is further assumed that the server Z has received another request to execute a process P2 before receiving the request from the server Y for executing the process P1. Accordingly, until the execution of the process P2 is finished, the request from the server Y to the server Z for executing the process P1 must be kept waiting in a queue $Q_Z$. Namely, the program executing environment $PEE_Z$ is scrambled by the request from the server Y and from the external world.

It is further assumed in Fig. 1 that the execution of the process P2 by using the program executing environment $PEE_Z$ inherently includes a process request to the server X. Therefore, to complete the process P2, a request is sent from the server Z to the server X. When the server X receives the request from the server Z, the server X executes the process P2 by using the program executing environment $PEE_X$.

It is still further assumed in Fig. 1 that the execution of the process P2 by using the program executing environment $PEE_X$ inherently includes a process request to the server Y. Therefore, to complete the process P2, a request is sent from the server X to the server Y. When the request is sent from the server X to the server Y, if the process P1 is not completed in the server Y, the request from the server X to the server Y must be kept waiting in a queue $Q_Y$. Namely, the program executing environment $PEE_Y$ is also scrambled by the request from the server X and the request from an external source.

For each process P1 or P2 itself, it may be easy to design the system in such a way that a loop is not formed in the servers X, Y, and Z. When the process P1 and the process P2 are combined, however, the program executing environments are scrambled so that a loop of "server X → server Y → server Z → server X" is formed as described above, resulting in a deadlock situation.

In this way, although there is an advantage in the data processing system of a client-server model construction in which once an interface to an object is determined, the client can request a service without considering the internal construction of the system, this advantage causes a disadvantage of the occurrence of a deadlock due to the combination of the processes. It is apparent that the deadlock due to the combination of the processes cannot be solved by considering each process separately.

To prevent the occurrence of such a deadlock, it may be considered to dynamically prepare all program executing environments every time a process request is generated. If this method is simply employed, however, new problems arise in that the performance of the original data processing function is deteriorated due to the process for dynamically preparing the program executing environment, and when loads are concentrated on a certain server, the memory capacity for the server is suppressed by the dynamically prepared program executing environments.

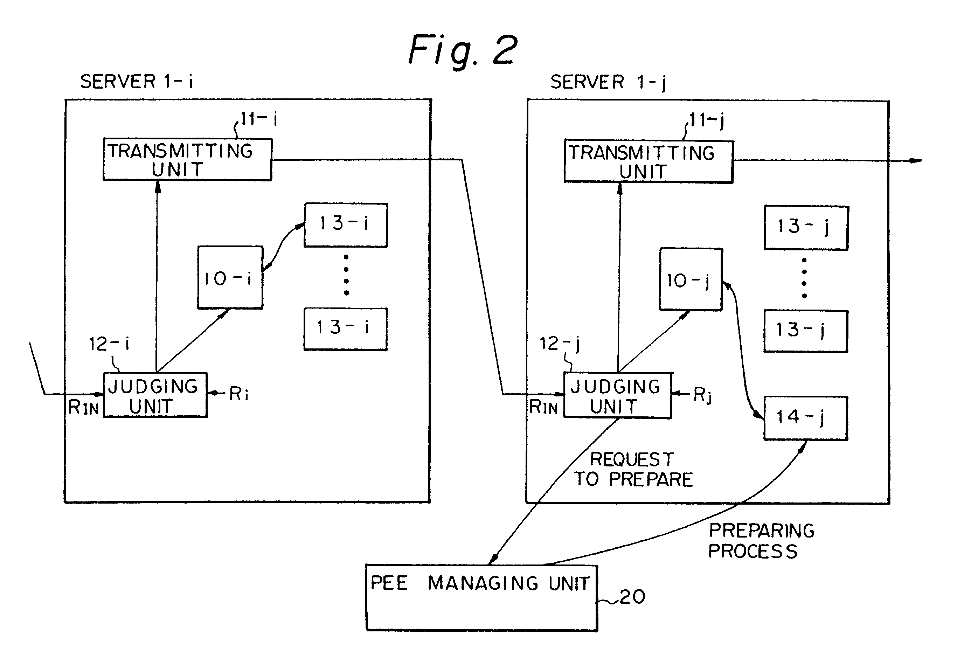

Figure 2 is a block diagram showing a principal construction of a data processing system of the present invention.

In the figure, 1-i and 1-j are servers for providing predetermined service processes. To each server 1-h (h = 1 to n, n = the total number of the servers), an identification number is assigned in a one to one correspondence. The identification numbers assigned to the respective servers are preferably continuous numbers. In the following, for the sake of convenience of the explanation, the identification number assigned to the server 1-h is $R_h$.

Each server 1-h comprises a service processing unit 10-h, a transmitting unit 11-h, a judging unit 12-h, one or plural program executing environments 13-h prepared at the time of system start up, and a program executing environment 14-h which is dynamically prepared in accordance with necessity.

The service processing unit 10-h executes a predetermined service process by using either one of the program executing environments 13-h which is prepared in advance at the time of system start up, or the dynamically prepared program executing environment 14-h.

The transmitting unit 11-h transmits, at the time of the message communication, the identification number $R_h$ assigned to its own server. The judging unit 12-h judges whether the received identification number

$R_{IN}$ transmitted from another server is larger or smaller than the identification number assigned to the own server 1-h to judge whether or not a request to prepare the program executing environment 14-h should be issued. The dynamically prepared program executing environment is so formed that the process executed by the dynamically prepared program executing environment is not linked into a process executed by the program executing environment prepared at the time of system start up. Here, it is preferable that the dynamically prepared program executing environment 14-h be deleted at the time when the corresponding process is finished.

In Fig. 2, 20 is a program executing environment managing unit for preparing and managing the program executing environments 13-h and 14-h which are necessary for the server 1-h. The program executing environment managing unit 20 prepares the program executing environment 13-h at the time of system start up, and dynamically prepares the program executing environment 14-h in accordance with a preparation request from the judging unit 12-h in each server 1-h.

In the present invention, the judging unit 12-h, when it judges that the received identification number $R_{IN}$ transmitted from another server is larger than the identification number $R_h$ assigned to its own server 1-h, instructs the service processing unit 10-h to begin execution of the service process by using the program executing environment 13-h prepared at the time of system start up. Contrary to this, the judging unit 12-h, when it judges that the received identification number $R_{IN}$ from another server is smaller than the identification number $R_h$ assigned to its own server 1-h, issues a request to dynamically prepare the program executing environment 14-h, and instructs the service processing unit 10-h to enter into the execution of the service process by using the program executing environment 14-h dynamically prepared in accordance with the preparation request, and further informs the transmitting unit 11-h of the contents of the instruction.

In accordance with this information, when the service processing unit 10-h executes the service process by using the dynamically prepared program executing environment 14-h, and when the transmitting unit 11-h further transmits a process request to another server 1-k (k = h), by transmitting, instead of the layer number $R_k$ of the server 1-k, an identification number R' having a smaller number than the minimum identification number $R_{min}$, whereby, the service processing unit 10-k in the server 1-k which is the destination of the process request also executes the service process by using the dynamically prepared program executing environment 14-k.

In accordance with this process, when the process request between the servers 1-h is executed in a certain direction determined by the larger or smaller

identification number $R_h$, the service process is executed by using the program executing environment 13-h prepared at the time of system start up; and once the process request between the servers 1-h is directed in the direction opposite to the above direction, the service process after this is executed by using the dynamically prepared program executing environment 14-h. Since the process using the dynamically prepared program executing environment is not linked into the process using the program executing environment prepared at the time of system start up, a loop as explained with reference to Fig. 1 is not formed, so that the occurrence of a deadlock due to the scrambling of the program executing environments can be prevented.

In this way, in the present invention, in a data processing system of the client-server model construction, the system is so constructed that the program executing environment is dynamically prepared to prevent a deadlock only when there is a possibility of forming a loop. Therefore, the occurrence of a deadlock can be prevented with the minimum deterioration of the system performance and with a small memory capacity. This effect of the present invention can be further increased by assigning the identification number $R_h$ in such a way that, taking into account the aspects of the process requests by the servers 1-h, the frequency of preparing the program executing environments 14-h is reduced.

In the following, the embodiments of the present invention will be described in more detail.

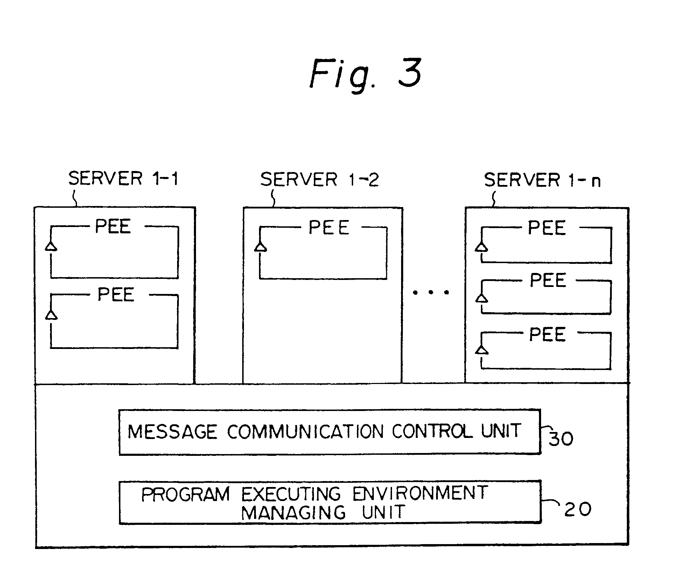

Fig. 3 is a block diagram showing the construction of a data processing system according to an embodiment of the present invention. As shown in the figure, the present invention is applied to a data processing system of a client-server model construction comprising a plurality of servers 1-h (h = 1 to n, n = the total number of the servers) for executing predetermined service processes, and for executing a process between the servers 1-h under the control of a message communication control unit 30. To a service processing function provided in each server 1-h, a program executing environment PEE prepared by a program execution environment managing unit 20 is appropriately assigned at the time of system start up or dynamically when the received identification number is smaller than its own identification number, for example, so that the occurrence of a deadlock due to scrambling of the program execution environments is efficiently prevented.

As described with reference to Fig. 2, according to the present invention, an identification number is assigned to each server 1-h in a one to one correspondence, and, when a message communication is to be executed for a process request, the assigned identification number $R_h$ is informed to the server 1-k which is the destination of the request. The assigned identification number $R_h$ is assigned in accordance with various methods. For example, when there is a relation "i < j" between the server 1-i and the server 1-j, it is possible to assign the identification numbers so that $R_i < R_j$.

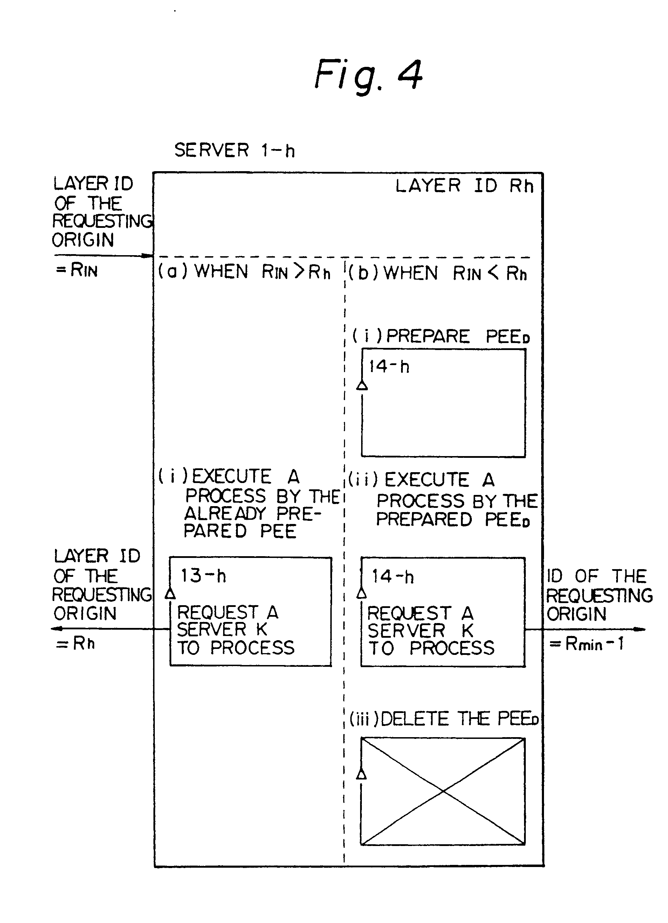

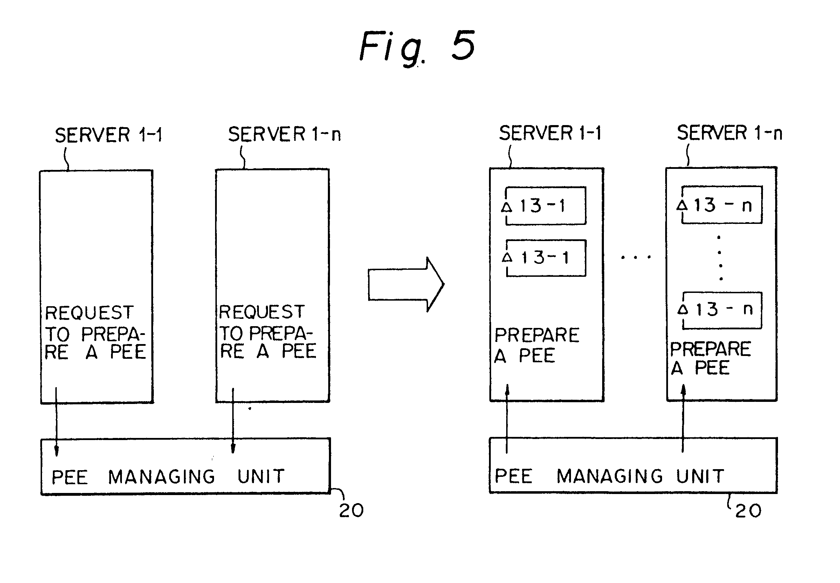

Fig. 4 is a block diagram showing the construction of a server according to an embodiment of the present invention. Fig. 5 is an explanatory diagram of program executing environments prepared at the time of system start up. Referring to Fig. 3 to Fig. 5, the processing contents of the present invention will be described in detail.

According to the present invention, in accordance with the process executed by the program executing environment managing unit 20, as shown in Fig. 4 and Fig. 5, a minimum number of required program executing environments 13-h determined by a queue model is prepared at the time of system start up in each server 1-h. Therefore, each server 1-h has one or plural program executing environments 13-h which have been prepared in advance at the time of system start up.

When a server 1-h receives an identification number $R_{IN}$ from another server, the server 1-h judges at first whether the received identification number $R_{IN}$ is larger or smaller than the identification number $R_h$ assigned to its own server 1-h. According to this judging process, when it is judged that the received identification number $R_{IN}$ is larger than the identification number $R_h$ of its own server 1-h, the program executing environment 13-h prepared at the time of system start up is used, as shown in Fig. 4, (a)(i). During the execution of this service, when a message requesting another server 1-k to execute a process is to be transmitted, the message and the identification number $R_h$ of its own server 1-h are transmitted to the server 1-k.

On the contrary, when the received identification number $R_{IN}$ is judged to be smaller than the identification number $R_h$ of its own server 1-h, the server 1-h issues to the program executing environment managing unit 20 a request to prepare a program executing environment 14-h which is different from the already prepared program executing environment 13-h. When the program executing environment 14-h is prepared in response to the request, a service process is executed by using the dynamically prepared program executing environment 14-h, as shown in Fig. 4, (b)(ii). During this service process, when a message requesting a process be executed is to be transmitted to the other server 1-k, the process is effected in such a way that an identification number $R_{min} -1$, which is the minimum identification number $R_{min}$ among the assigned identification numbers $R_h$ minus "1", is transmitted to the server 1-k instead of transmitting the identification number $R_h$ of the own server 1-h. By the transmitting process of the identification number "$R_{min} -1$", the server 1-k which is the destination of the process request carries out the process to execute the service process by using the dynamically prepared program executing environment 14-k, in the same way as in the server 1-h which is the origin of the request. When the service process is finished, a request is sent to the program executing environment managing unit 20 to delete the dynamically prepared program executing environment 14-h, as shown in Fig. 4, (b)(iii).

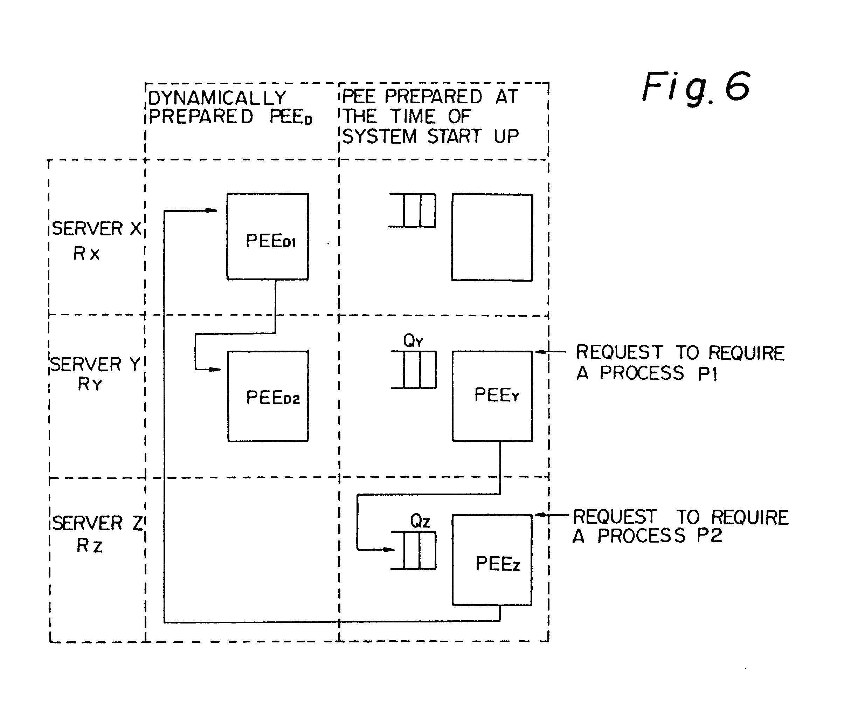

In accordance with this process, when a process request between servers 1-h is from one having a larger identification number $R_h$ to a smaller one, the service process is executed by using the program executing environment 13-h which is prepared at the time of system start up, and when the process request between the servers 1-h is executed in the opposite direction to the above, a service process is thereafter executed by using the dynamically prepared program executing environment 14-h. In this way, the loop as explained in the conventional example with reference to Fig. 1 is not formed as shown in Fig. 6 so that a deadlock due to the scrambling of the program executing environments can be prevented.

Fig. 6 is an explanatory diagram of a process for dynamically preparing new program executing environments according to an embodiment of the present invention. In Fig. 6, three servers X, Y, and Z are shown, and the identification numbers $R_X$, $R_Y$, and $R_Z$ of the servers X, Y, and Z are assumed to have a relation $R_X > R_Y > R_Z$.

The servers X, Y, and Z respectively include program executing environments $PEE_X$, $PEE_y$, and $PEE_Z$ which have been prepared in advance at the time of system start up.

When a request to execute a process P1 is given to the server Y, the server Y executes the process P1 by using the program executing environment $PEE_Y$ in the server Y. In the example illustrated in Fig. 6, it is also assumed in the same way as in the conventional example shown in Fig. 1 that the execution of the process P1 using the program executing environment $PEE_Y$ inherently includes a process request to the server Z. Therefore, to complete the process P1, a request accompanied by the identification number $R_Y$ is sent from the server Y to the server Z. In the server Z, since the received identification number $R_Y$ is larger than the identification number $R_Z$ of its own server Z, the server Z executes the process by using the program executing environment $PEE_Z$ prepared at the time of system start up. It is further assumed that, in the same way as the conventional example, the server Z has received another request to execute a process P2 before receiving the request from the server Y to execute the process P1. Accordingly, until the execution of the process P2 is finished, the request from the server Y to the server Z for executing the process P1 must be kept waiting in a queue $Q_Z$.

It is further assumed in Fig. 6 that the execution of the process P2 using the program executing environment $PEE_Z$ inherently includes a process request to the server X. Therefore, to complete the process P2, a request accompanied by the identification number $R_Z$ of the server Z is sent from the server Z to the server X. When the server X receives the request from the server Z, the server X judges that the received identification number $R_Z$ is smaller than its own identification number $R_X$. Therefore, the server X prepares a new program executing environment $PEE_{D1}$ which is not linked to the already prepared program executing environment. It is still further assumed in Fig. 6 that the execution of the process by using the new program executing environment $PEE_{D1}$ inherently includes a process request to the server Y. Therefore, to complete the process, a request is sent from the server X to the server Y. When the request is sent from the server X to the server Y, according to the embodiment of the present invention, an identification number $R_Z$ -1 is also sent from the server X to the server Y. In the server Y, since the received identification number $R_Z$ -1 is smaller than its own identification number $R_Y$, the server Y also prepares a new program executing environment $PEE_{D2}$ which is not linked to any program executing environment prepared at the time of system start up.

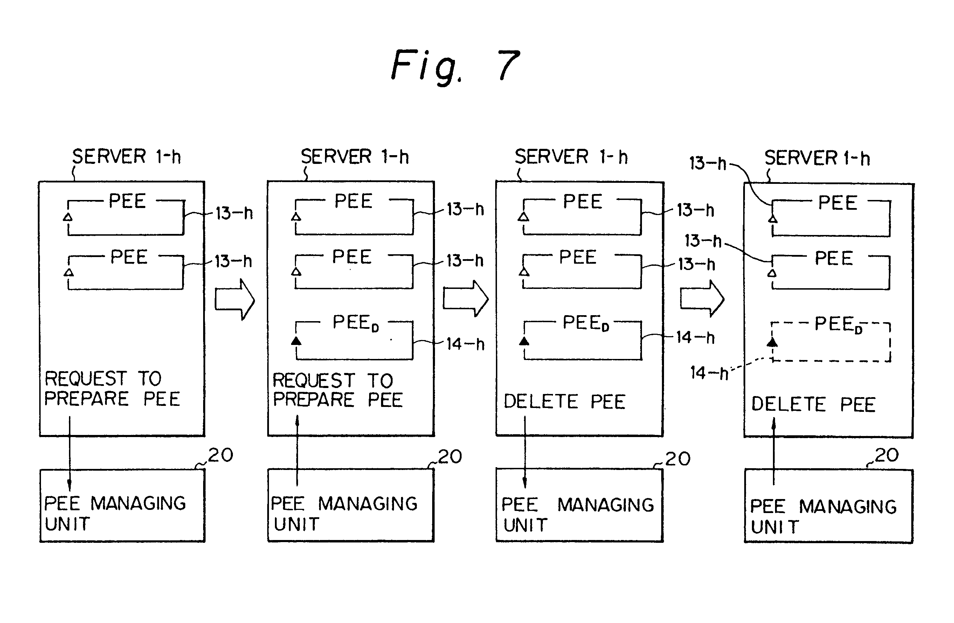

Fig. 7 is an explanatory diagram of the process for deleting the dynamically prepared program executing environments according to an embodiment of the present invention. As shown in Fig. 7, after executing a process using the dynamically prepared program executing environment $PEE_D$, the server 1-h requests the program executing environment managing unit 20 to delete the dynamically prepared program executing environment $PEE_D$ and, in response to the request, the managing unit 20 deletes the $PEE_D$.

According to the present invention, as shown in Fig. 7, in the data processing system of a client-server model construction, the program executing environment 14-h is prepared dynamically only when there is a possibility of forming a loop, so that the occurrence of a deadlock is prevented. Note that the general aspect of the process request between the servers 1-h can be grasped at the system design stage. Therefore, it is preferable that, based on the understandings of the general aspect, the identification numbers $R_h$ are assigned in such a way that the frequency of preparing the program executing environments 14-h is small so that the deterioration of the system performance accompanied by the preparation of the program executing environments 14-h is minimized.

The present invention is not restricted to the above-described embodiment. For example, in the embodiment, it was described that the program executing environment 13-h prepared at the time of system start up is used when the process request between the servers 1-h is effected from the larger identification number to the smaller one, however, it is possible to reverse this.

As described above, according to the present invention, in a data processing system of a client-server model construction, a program executing environment is prepared dynamically only when there is a possibility of forming a loop, so that the generation of a deadlock is prevented while the deterioration of the system performance is minimized and the memory capacity is small.

## Claims

1. A processing system for assigning a program executing environment in a data processing system comprising a plurality of servers (1-i, 1-j) each providing a service in response to a process request from an external source or through message communication between two of said servers;

    each of said servers comprising:

    at least one already prepared program executing environment (13-h) prepared at the time of system start up; characterised by

    new program executing environment dynamically preparing means for dynamically preparing a new program executing environment (14-h) which is not linked to said already prepared program executing environment prepared at the the of system start up;

    judging means (12-i, 12-j) for determining, based on said message communication, whether or not a request to process received from another one of said servers forms a loop among said servers;

    first process executing means for executing a process by using said already prepared program executing environment when said judging means judges that the request from another one of said servers does not form a loop among said servers; and

    second process executing means for executing a process by using said new program executing environment dynamically prepared when said judging means judges that the request from another one of said servers forms a loop.

2. A processing system for assigning a program executing environment as claimed in claim 1, wherein each of said servers is provided in advance with an identification number with a one to one correspondence;

    each of said servers (1-i, 1-j) comprising transmitting means (11-i, 11-j) for transmitting a message to another one of said servers, said message including a process request and said identification number of its own server; and

    said judging means (12-i, 12-j) determining whether or not a new program executing environment should be dynamically prepared, by judging whether or not the received request forms a loop among said servers by judging whether or not the identification number received from another one of said servers is larger or smaller than the identification number assigned to its own server;

    each of said servers (1-i,-1-j) dynamically preparing a new program executing environment and executing a process by using said dynamically prepared new program executing environment when said judging means (12-i, 12-j) judges that a new program executing environment should be prepared;

    each of said servers (1-i, 1-j) executing a process by using said program executing environment prepared at the time of system start up when said judging means (12-i, 12-j) judges that a new program executing environment should not be prepared; and

    during the execution of a process by using said dynamically prepared program executing environment, when a request for processing is sent from one of said servers (1-i, 1-j) to another one of said servers (1-i, 1-j), said transmitting means (11-i, 11-j) in the requesting server transmitting, instead of the identification number originally assigned to the requesting server, a new identification number different from the originally assigned identification numbers, for preparing a new program executing environment, to the requested server.

3. A processing system for assigning a program executing environment as claimed in claim 2, wherein said identification numbers are assigned in order to from a larger number to the smaller number; when the received identification number is larger than the identification number of its own server, the already prepared program executing environment is used; and when the received identification number is smaller than the identification number of its own server, the dynamically prepared program executing environment is used.

4. A processing system for assigning a program executing environment as claimed in claim 3, wherein, during the execution of a process by using said dynamically prepared program executing environment, when a request for processing is sent from one of said servers (1-i, 1-j) to another one of said servers (1-i, 1-j), said transmitting means (11-i, 11-j) in the requesting server transmitting, instead of the identification number originally assigned to the requesting server, a new identification number smaller than the minimum identification number already assigned to any one of said servers, for preparing a new program executing environment, to the requested server.

5. A processing system for assigning a program executing environment as claimed in claim 2, wherein said identification numbers are assigned in order from a smaller number to a larger number; when the received identification number is smaller than the identification number of the own server, the already prepared program executing environment is used; and when the received identification number is larger than the identification number of its own server, the dynamically prepared program executing environment is used.

6. A processing system for assigning a program executing environment as claimed in claim 5, wherein, during the execution of a process by using said dynamically prepared program executing environment, when a request for processing is sent from one of said servers (1-i, 1-j) to another one of said servers (1-i, 1-j), said transmitting means (11-i, 11-j) in the requesting server transmitting, instead of the identification number originally assigned to the requesting server, a new identification number larger than the maximum identification number already assigned to any one of said servers, for preparing a new program executing environment, to the requested server.

7. A processing system for assigning a program executing environment as claimed in any one of claims 2 to 6, wherein it is so constructed that the identification number assigned to each of said servers is assigned in such a way that the frequency of preparing the dynamically prepared program executing environment becomes small.

8. A processing system for assigning a program executing environment as claimed in any preceding claim, wherein said dynamically prepared program executing environment is deleted after the end of the process using said dynamically prepared program executing environment.

# Fig. 1

SERVER X

PEEx

RECEIVES A REQUEST TO
PROCESS FROM A SERVER Z,
REQUESTS A SERVER Y TO
PROCESS DURING EXECUTING
THE PROCESS, AND WAITS
THE COMPLETION OF THE
PROCESS BY THE SERVER Y

$Q_Y$

WAITS PEE OF
THE SERVER Y
TO BE VACANT

SERVER Y

PEEy

REQUESTS A SERVER Z TO
PROCESS FOR EXECUTING
THE PROCESS P1, AND
WAITS THE COMPLETION OF
THE PROCESS BY THE SERVER
Z

REQUEST TO
EXECUTE A
PROCESS P1

$Q_Z$

WAITS PEE OF
THE SERVER Z
TO BE VACANT

SERVER Z

PEEz

REQUESTS THE SERVER X TO
PROCESS FOR EXECUTING
THE PROCESS P2, AND
WAITS THE COMPLETION OF
THE PROCESS BY THE SERVER
X

REQUEST TO
EXECUTE A
PROCESS P2

# Fig. 2

SERVER 1-i

TRANSMITTING UNIT  11-i

13-i

10-i

13-i

12-i

JUDGING UNIT — $R_i$

$R_{IN}$

SERVER 1-j

TRANSMITTING UNIT  11-j

13-j

10-j

13-j

12-j

JUDGING UNIT — $R_j$

$R_{IN}$

14-j

REQUEST TO PREPARE

PREPARING PROCESS

PEE  MANAGING UNIT  20

EP 0 459 775 A2

# Fig. 3

SERVER 1-1      SERVER 1-2      SERVER 1-n

| PEE | PEE | | PEE |
|-----|-----|--|-----|
| PEE | | | PEE |
| | | | PEE |

. . .

| MESSAGE COMMUNICATION CONTROL UNIT | 30 |

| PROGRAM EXECUTING ENVIRONMENT MANAGING UNIT | 20 |

# Fig. 4

SERVER 1-h

LAYER ID OF THE REQUESTING ORIGIN

= R$_{IN}$

LAYER ID R$_h$

(a) WHEN R$_{IN}$ > R$_h$ | (b) WHEN R$_{IN}$ < R$_h$

( i ) PREPARE PEE$_D$

14-h

( i ) EXECUTE A PROCESS BY THE ALREADY PRE-PARED PEE

(ii) EXECUTE A PROCESS BY THE PREPARED PEE$_D$

LAYER ID OF THE REQUESTING ORIGIN

= R$_h$

13-h

REQUEST A SERVER K TO PROCESS

14-h

REQUEST A SERVER K TO PROCESS

ID OF THE REQUESTING ORIGIN

= R$_{min}$ - 1

(iii) DELETE THE PEE$_D$

# Fig. 5

| SERVER 1-1 | SERVER 1-n | | SERVER 1-1 | SERVER 1-n |
|---|---|---|---|---|

REQUEST TO PREPA-RE A PEE

REQUEST TO PREPA-RE A PEE

PREPARE A PEE

PREPARE A PEE

△13-1

△13-1

△13-n

△13-n

PEE MANAGING UNIT

PEE MANAGING UNIT

20

20

EP 0 459 775 A2

Fig. 6

EP 0 459 775 A2

# Fig. 7

EP 0 459 775 A2